# FASCICULE DE BREVET EUROPEEN

(11) **EP 3 280 777 B1**
(45) Date de publication et mention de la délivrance du brevet: **21.04.2021**
(21) Numéro de dépôt: 16717289.9
(22) Date de dépôt: 06.04.2016
(51) Int. Cl.: C09K 8/035, C04B 28/02, C09K 8/487, C09K 8/508, C04B 24/26

(54) **POLYMÈRES SÉQUENCÉS POUR LE CONTRÔLE DU FILTRAT**
SEQUENZIERTE POLYMERE ZUR ÜBERWACHUNG DES FILTRATS
SEQUENCED POLYMERS FOR MONITORING THE FILTRATE

(30) Priorité: 07.04.2015 FR 1500698
(43) Date de publication de la demande: 14.02.2018
(73) Titulaire: Rhodia Operations, 93300 Aubervilliers (FR)
(72) Inventeur: CADIX, Arnaud, 75017 Paris (FR); WILSON, David James, 60580 Coye la Forêt (FR)
(74) Mandataire: Osha Liang
(86) Numéro de dépôt international: PCT/EP2016/057546
(87) Numéro de publication internationale: WO 2016/162387

(56) Documents cités:
- WO-A1-2004/022668
- CN-A- 101 967 369
- US-A- 6 017 854
- US-A1- 2004 127 606

## Description

La présente invention a trait au domaine de l'extraction pétrolière. Plus précisément, elle concerne des agents assurant un effet de contrôle du filtrat dans des fluides injectés sous pression dans des formations souterraines.

Dans le domaine de l'extraction pétrolière, de nombreuses étapes sont conduites en injectant des fluides sous pression au sein de formations souterraines. Dans la présente description, la notion de « *formation souterraine* » s'entend dans son acception la plus large et inclut aussi bien une roche contenant des hydrocarbures, notamment du pétrole, que les différentes couches de roche traversées pour accéder à cette roche pétrolifère et assurer l'extraction des hydrocarbures. Au sens de la présente description, la notion de « *roche* » est utilisée pour désigner tout type de matériau constitutif d'une formation souterraine solide, que le matériau la constituant soit, ou non, une roche à proprement parler. Ainsi, en particulier, l'expression « roche pétrolifère » est employée ici comme synonyme de « *réservoir pétrolifère* » et désigne toute formation souterraine contenant des hydrocarbures, notamment du pétrole, quelle que soit la nature du matériau contenant ces hydrocarbures (roche ou sable par exemple).

Parmi les fluides injectés sous pression dans des formations souterraines, on peut notamment citer les différents fluides de complétion et reconditionnement des puits, notamment les fluides de forage , qu'ils soient utilisés pour accéder à la roche pétrolière ou bien pour forer le réservoir lui-même (« *drill in* ») ou bien les fluides de fracturation, ou bien encore les fluides de complétion, les fluides de contrôle ou de reconditionnement (*« workover fluids* ») ou les fluides d'annulaire ou fluides de « *packer* ».

Un cas spécifique est celui des coulis de ciment pétrolier, qui sont employés pour la cimentation de l'annulaire des puits pétroliers selon une méthode bien connue en soi, décrite par exemple dans Le Forage par J.P Nguyen (Editions Technip 1993). Ces coulis de ciment pétroliers sont injectés sous pression dans l'intérieur d'un tubage métallique (cuvelage) introduit dans le trou de forage des puits de pétrole puis remontent, sous l'effet de la pression par l'espace dit « annulaire » (« *annulus* » en anglais) situé entre le cuvelage et le trou de forage puis prennent et durcissent dans cet annulaire, assurant ainsi la stabilité du puits en cours de forage.

Au sein d'un puits d'extraction pétrolière, la mise en contact du fluide sous pression et de la formation souterraine (qui présente le plus souvent une porosité plus ou moins élevée, voire des fissures) induit un effet dit de « *perte de fluide* » dit également de *« filtrat* » (phénomène désigné par le terme de « *fluid loss* » en anglais) : le liquide présent dans le fluide a tendance à pénétrer dans la roche constitutive de la formation souterraine, ce qui peut endommager le puits, voire nuire à son intégrité. Lorsque ces fluides employés sous pression contiennent des composés insolubles (ce qui est très souvent le cas, notamment pour les coulis de ciment pétrolier ou bien les fluides de forages ou de fracturation comprenant des polymères), l'effet de perte de fluide induit en parallèle une concentration du fluide, ce qui peut conduire à une augmentation de viscosité affectant la mobilité du fluide.

Dans le cas particulier d'un coulis de ciment, la perte de fluide peut en outre induire une prise trop rapide du ciment, avant que l'espace de l'annulaire soit cimenté, ce qui peut, entre autres, fragiliser la structure du puits et nuire à son étanchéité.

Pour plus de détails concernant l'effet de perte de fluide et ses effets en cimentation, on pourra notamment se reporter à Well Cementing, E.B. Nelson (Elsevier, 1990).

En vue d'inhiber le phénomène de perte de fluide, il a été décrit un certain nombre d'additifs qui permettent de limiter (voir d'empêcher totalement dans certains cas) la fuite du liquide présent dans le fluide vers la roche avec laquelle il entre en contact. Ces additifs, dits « *agents de contrôle du filtrat* » (ou « *fluid loss control agents* » en anglais) permettent en général d'obtenir, en parallèle, un effet de contrôle de la migration de gaz, à savoir une isolation du fluide vis-à-vis des gaz contenus dans la roche (gaz dont il convient d'éviter qu'ils ne pénètrent le fluide notamment dans le cas de coulis de ciment, ces gaz ayant tendance à fragiliser le ciment en cours de prise.

Divers agents de contrôle du filtrat du type précité ont été proposés, qui incluent notamment des dérivés cellulosiques (hydroxyéthylcellulose, par exemple) ou bien encore des copolymères à base d'AMPS comme ceux décrits par exemple dans US 4,632,186 ou US 4,515,635. Ces additifs ne sont pas toujours pleinement adaptés pour assurer, en pratique, une limitation efficace de la perte de fluide. En particulier, et c'est notamment le cas dans le domaine des coulis de ciment pétrolier, la présence d'autres additifs peut inhiber l'effet des agents employés pour assurer le contrôle du filtrat. En particulier, en présence de certains agents dispersants ou agents retardateurs de prise, les agents de contrôle du filtrat précités voient en général leurs propriétés se dégrader Le document US6017854 A divulgue l'utilisation d'un polymère séquence comme agent de contrôle de filtrat dans un fluide non-aqueux. Le document US 2004/127606 A1 divulgue l'utilisation de copolymères dans des compositions de ciment, pour contrôler le filtrat.

Un but de la présente invention est de fournir de nouveaux agents de contrôle du filtrat pour des fluides injectés sous pression dans des formations souterraines, qui soient bien adaptés en pratique.

A cet effet, la présente invention propose d'utiliser des copolymères particuliers, qui sont propres à assurer un effet de contrôle du filtrat lorsqu'ils sont employés avec des particules, avec lesquelles ils s'associent, ces particules pouvant être des particules présentes au sein de la formation souterraine ; et/ou des particules de ciment dans le cas d'un fluide employé en cimentation ; et/ou des particules injectées au sein de formations souterraines avec les copolymères.

Plus précisément, selon un premier aspect, la présente invention a pour objet l'utilisation, à titre d'agent de contrôle du filtrat dans un fluide aqueux (F) injecté sous pression dans une formation souterraine où ledit fluide aqueux (F) comprend des particules solides (p) et/ou est mis en contact avec des particules solides (p) au sein de la formation souterraine suite à son injection, d'un polymère séquencé (P) comprenant au moins trois blocs, incluant :
- au moins un premier bloc dit « de type (A) », désigné aussi ci-après par « bloc court », de masse moléculaire moyenne en poids typiquement inférieure à 30 000 g/mol, voire à 20 000 g/mol ou inférieur, qui s'adsorbe, de préférence irréversiblement, sur au moins une partie des particules (p); et
- au moins un deuxième bloc (B), dit aussi ci-après «bloc long », de composition distincte de celle dudit premier bloc et de masse moléculaire moyenne en poids supérieure à 5 000 g/mol, par exemple supérieure à 10 000 g/mol (cette mase masse moléculaire moyenne en poids étant typiquement, mais non nécessairement, supérieure à la masse moléculaire moyenne en poids du premier bloc) et soluble dans le fluide (F).
- au moins un troisième bloc de type (A) ou de type (B) (F) et où les particules (p) sont des particules de carbonate de calcium ou de ciment; des particules de silice ou de sable; des particules d'argile; ou des particules de noir de carbone.

Selon un mode de réalisation possible, un polymère séquencé (P) utile selon l'invention peut être un copolymère tribloc de type (A)-(B)-(A) ou (B)-(A)-(B).

Il peut également s'agir d'un polymère de type en étoile, comprenant des chaînes (« bras » ou « branche ») liées entre elles autour d'un atome central ou, plus généralement, d'une structure moléculaire plus complexe jouant le rôle de « cœur », sur lequel les branches sont liées de façon covalent.

Lorsqu'il est de type en étoile, le polymère (P) est typiquement du type suivant :
- un polymère en étoile comprenant au moins une branche de type (A) et au moins deux branches de type (B) ; ou
- un polymère de type en étoile comprenant au moins deux branches de type (A) et au moins une branche de type (B).

Selon un mode de réalisation particulièrement intéressant, un polymère séquencé (P) utile selon l'invention peut être un copolymère de type peigne, avec des chaînes latérales portées par une chaîne linéaire (squelette), par exemple :
- un polymère portant plusieurs blocs latéraux de type (A) sur un bloc linéaire de type (B), correspondant typiquement à la structure schématique suivante : 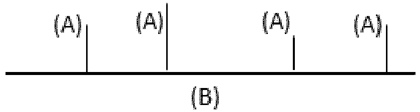
- un polymère portant plusieurs blocs latéraux de type (B) sur un bloc linéaire de type (A), correspondant typiquement à la structure schématique suivante : 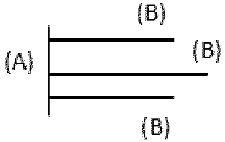
- un polymère portant plusieurs blocs latéraux de type A et B sur une chaîne polymère linéaire, ladite chaîne polymère linéaire pouvant ou non comprendre (ou être constituée par) un ou plusieurs bloc(s) de type (A) et/ou un ou plusieurs bloc(s) de type (B), ce qui correspond typiquement à l'une des structures schématiques suivante :

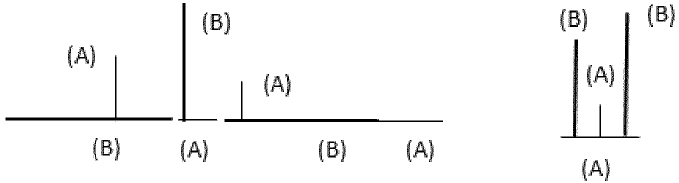

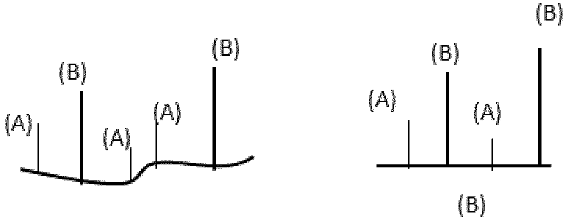

Les polymères spécifiques employés dans le cadre de la présente invention, de par la présence des blocs spécifiques de type (A) et (B) s'avèrent fournir un effet de contrôle du fluide particulièrement efficace : la présence des blocs courts de type (A) assure un ancrage du polymère sur les particules, et la présence des blocs long de type (B), de taille élevée et soluble, assure schématiquement un effet d'augmentation locale de la viscosité du fluide (F) autour des particules.

On obtient ainsi, à la surface des particules (p), la formation d'une couche polymère à base des blocs longs de type (B) ancrés sur les particules à l'aide des blocs de type (A), l'association particules/polymères ainsi réalisée formant en quelque sorte un « bouchon » de taille suffisante au niveau des porosités de la roche, qui permet de limiter, voire de bloquer totalement, le phénomène de filtrat.

Il est à noter que l'emploi de polymères à base de blocs longs (B) uniquement n'assurerait pas un contrôle du filtrat selon l'invention, qui nécessite un ancrage des blocs longs de type (B) sur les particules (p) *via* les blocs courts de type (A).

Notamment pour que cet ancrage soit le plus efficace possible, il est préférable que l'interaction entre le bloc court de type (A) et les particules (p) soit la plus forte possible et, avantageusement, que cette interaction soit irréversible. De préférence, le bloc court (A) d'un polymère (P) utile selon l'invention comporte :
- au moins un groupement chimique formant au moins une liaison de type ionique, covalente ou iono-covalente entre polymère et particule ;
et/ou
- plusieurs groupements chimiques formant chacun au moins une liaisons hydrogène et/ou de Van der Waals entre polymère et particule, l'ensemble de ces liaisons formant ensemble une liaison globale de force au moins dans la gamme de celle d'une liaison de type ionique, covalente, iono-covalente.

Les interactions fortes entre particules et polymères permettent en outre, au besoin, d'employer le polymère (P) en présence d'additifs qui, habituellement, nuisent à l'efficacité des agents de contrôle du filtrat. En particulier, les polymères (P) tels qu'employés selon l'invention peuvent être mis en œuvre dans la plupart des formulations de fluides destinés à être injectés dans des roches pétrolières, notamment des coulis de ciment pétrolier comprenant des additifs de type dispersants ou agents retardateur de prise aussi bien que dans des fluides de forage et de fracturation.

Selon une première variante de l'invention, le fluide (F) injecté comprend le polymère (P) mais ne comprend pas de particules solides (p), et il rencontre lesdites particules (p) au sein de la formation souterraine suite à son injection. L'association entre particules et polymères se fait alors *in situ.* Un tel fluide peut par exemple être injecté lors d'une opération de forage, et les déblais de roche formés lors du forage assurent alors le rôle des particules (p) *in situ.*

Selon une variante alternative, le fluide (F) injecté comporte avant l'injection au moins une partie, et en général la totalité, des particules (p) associées au polymère (P), étant entendu qu'il peut éventuellement rencontrer d'autres particules (p) au sein de la formation souterraine.

Deux modes sont notamment envisageables dans ce cadre :
- mode 1 : le polymère (P) et les particules (p) sont mélangés lors de la formulation du fluide (F), sur le lieu de l'exploitation ou en amont, typiquement en additionnant les particules (p), à l'état sec ou éventuellement à l'état dispersé, à une composition comprenant le polymère (P) en solution. Selon cette variante, le fluide (F) peut par exemple être un coulis de ciment pétrolier, que l'on prépare en ajoutant de la poudre de ciment à titre de particules (p) dans une composition aqueuse comprenant le polymère (P) en solution.
- mode 2 : le fluide (F) est fabriqué, avantageusement sur le lieu de l'exploitation, à partir d'une composition (pré-mélange) préparée en amont (désignée ci-après par le terme de « *blend* ») comprenant le polymère (P) et au moins une partie des particules (p), en général au sein d'un liquide dispersant. Pour former le fluide (F), ce *blend* est mélangé aux autres constituants du fluide (F).

Dans le cadre de ces modes 1 et 2, le polymère (P) présente accessoirement l'avantage non négligeable d'améliorer la dispersibilité et la mise en suspension des particules (p). Dans certains modes de réalisation, les polymères (P) associés aux particules (p) peuvent être employés principalement en tant qu'agent dispersant et stabilisant de la dispersion des particules (p), en assurant dans le même temps un effet d'agent de contrôle du filtrat.

Selon un autre aspect, la présente invention a pour objet certains polymères séquencés particuliers utilisables selon l'invention, qui ont été développés par les inventeurs spécifiquement pour cette application.

L'invention a également pour objet les fluides pour injection sous pression au sein d'une roche pétrolière ou d'un puits de forage comprenant ces polymères séquencés spécifiques, ainsi que les *blends* pour la préparation de ces fluides comprenant ces polymères en association à des particules (p).

Différents avantages et modes de réalisation particuliers de l'invention vont maintenant être décrits plus en détails.

### Le fluide (F) et les blocs long de type (B)

Par « *fluide* », on entend, au sens de la description tout milieu, homogène ou non, comprenant un vecteur liquide ou visqueux transportant éventuellement une phase dispersée, liquide ou gélifiée, et/ou des particules solides, ledit milieu étant globalement pompable au moyen des dispositifs d'injection sous pression utilisés dans l'application considérée.

Par « *vecteur liquide ou visqueux»* du fluide (F), on entend le fluide lui-même ; ou bien le solvant dans le cas où le fluide comprend des composés dissous et/ou la phase continue dans le cas où le fluide contient des éléments dispersés (gouttelettes de phase dispersée liquide ou gélifiée, particules solides...).

La nature du fluide (F) et du bloc long (B) des polymères (P) utilisés selon la présente invention peut varier en une assez large mesure, sous réserve de la compatibilité du vecteur liquide ou visqueux du fluide (F) et du bloc long (B). En particulier, on emploie un bloc long (B) de nature hydrophile lorsque le vecteur liquide ou visqueux présent dans le fluide (F) est de nature hydrophile ; inversement, lorsque le vecteur liquide ou visqueux du fluide (F) est hydrophobe, on emploie un bloc long (B) de nature hydrophobe.

Les blocs long de type (B) des polymères utiles selon l'invention est spécifiquement soluble dans le fluide (F). On entend par là que le bloc long (B) pris isolément peut être dissous dans le vecteur liquide ou visqueux du fluide (F). De préférence, le bloc long (B) est soluble à 25°C et à 1% en masse dans le vecteur liquide ou visqueux du fluide (F). La notion de « solubilité à 25°C » implique uniquement qu'on peut obtenir une solution plus ou moins visqueuse, voire gélifiée qui, à 25°C, ne conduit pas à une précipitation. Cette notion n'exclut pas que la mise en solution du bloc (B) puisse impliquer un chauffage préalable à plus de 25°C pour obtenir cette solution. En d'autres termes, la notion de « solubilité à 25°C » implique la possibilité de former une solution qui ne précipite pas à 25°C, et non pas la possibilité de former à 25°C une solution qui ne précipite pas.

Par ailleurs, il est préférable que le bloc long (B) développe le moins possible d'interactions, voire pas du tout d'interactions, avec les particules (p). Il est par ailleurs préférable que le bloc long (B) des polymères (P) utiles selon l'invention développe moins d'interactions avec les particules que le bloc court (A).

En tout état de cause, les blocs de type (A) et le bloc (B) ont des compositions distinctes au sein d'un même polymère.. On entend par là que:
- les blocs de type (A) et (B) comprennent des unités monomères distinctes ; ou
- au moins certains des monomères présents sur le bloc (A) ne sont pas présents sur le bloc (B); et/ou au moins certains des monomères présents sur le bloc (B) ne sont pas présents sur le bloc (A) ou
- le bloc (A) et le bloc (B) comprennent les mêmes unités monomères, mais dans des proportions distinctes.

Le bloc long (B) a de préférence une masse moléculaire moyenne en poids d'au moins 20 000 g/mol, cette masse moléculaire moyenne en poids étant préférentiellement d'au moins 50 000 g/mol, voire d'au moins 100 000 g/mol. Selon un mode de réalisation particulier, la masse moléculaire moyenne en poids du bloc long (B) est supérieure ou égale à 250 000 g/mol., voire supérieure ou égale à 500 000 g/mol., par exemple supérieure à 1 000 000 g/mol.

Selon l'invention, le fluide (F) est un fluide aqueux. Par « aqueux », on entend ici que le fluide comprend à titre de vecteur liquide ou visqueux de l'eau, soit à titre d'unique constituant du vecteur liquide ou visqueux, soit en association avec d'autres solvants hydrosolubles.

En cas de présence de solvants autres que l'eau dans le vecteur liquide ou visqueux du fluide (F), l'eau reste avantageusement le solvant majoritaire au sein du vecteur liquide ou visqueux, présent avantageusement à raison d'au moins 50% en masse, voire d'au moins 75% en masse par rapport à la masse totale des solvants dans le vecteur liquide ou visqueux.

Comme le fluide (F) est un fluide aqueux, le bloc (B) est avantageusement un bloc de nature hydrophile. Par « *bloc de nature hydrophile* », on entend ici un bloc polymère qui, à l'état isolé, est soluble dans l'eau pure à raison de 1% en masse à 25°C (la mise en solution pouvant éventuellement impliquer un chauffage), en formant une solution plus ou moins visqueuse, voire gélifiée, mais sans formation de précipité à 25°C.

Avantageusement, les blocs de type (B) de nature hydrophile employés lorsque le fluide (F) est un fluide aqueux est constitué au moins majoritairement par des unités monomères choisies dans le groupe consistant en les unités monomères U1 à U5 définies ci-après, et les mélanges de ces unités monomères :
- **unités monomères U1 :** unités monomères comprenant un groupement fonctionnel acrylamide, notamment diméthylacrylamide (DMA) ou bien encore (méth)acrylamide, morpholine N-oxide acrylamide, diacétone acrylamide ; le bloc (B) comprend avantageusement des unités monomères de ce type
- **unités monomères U2 :** unités monomères comprenant un groupement fonctionnel acide sulfonique ou sulfonate, incluant notamment les unités (méth)acrylate de 3-sulfopropyle, acide 2-propène-1-sulfonique, 1-allyloxy-2 hydroxypropyle sulfonate de sodium (COPS1), notament acide 2-acrylamido-2-méthyle propane sulfonique (AMPS), sulfonate de (méth)allyle, vinyle sulfonate de sodium, sodium styrène sulfonate, 3-sulfopropyldiméthyl-3-méthacrylamidopropylammonium, N-(2-méthacryloyloxyéthyl)-N,N-diméthyl-N-(3-sulfopropyl)ammoniumbétaine, N-(2-1-(3-sulfopropyl)-2-vinylpyridiniumbétaine.
- **unités monomères U3** : unités monomères neutres incluant entre autres :
   les esters d'acides mono- ou di- carboxyliques [alpha],[beta]-éthyléniquement insaturés avec des alcanediols en C2-C30 ou des polyéthyleneglycol, par exemple les 2-hydroxyéthylacrylate, 2-hydroxyéthylméthacrylate, 2-hydroxyéthyléthacrylate, 2-hydroxypropylacrylate, 2-hydroxypropylméthacrylate, 3-hydroxypropyl acrylate, 3-hydroxypropylméthacrylate, 3-hydroxybutylacrylate, 3-hydroxybutyl méthacrylate, 4-hydroxybutylacrylate, 4-hydroxybutylméthacrylate, 6-hydroxy hexylacrylate, 6-hydroxyhexylméthacrylate, 3-hydroxy-2-éthylhexyl acrylate, 3-hydroxy-2-éthylhexylmethacrylate, N-(hydroxyméthyl)acrylamide, N-(2-hydroxy propyl)méthacrylamide, N-hydroxyéthylacrylamide, N-[tris(hydroxyméthyl) méthacrylamide, 4-acryloylmorpholine, 2-N-morpholinoéthyle méthacrylate, méth(acrylate) de polyéthylèneglycol, (méth)acrylate de diéthylène glycol, éthylène glycol méthyl éther (méth)acrylate, acrylate de 2-hydroxyéthyle, acrylate d'hydroxypropyle, acrylate de poly(propylène glycol), acrylate de 2-chloroéthyle,
   les acrylate de tétrahydrofurfuryle, vinyl acétamide, vinyl pyrrolidone, N-vinyl pipéridone, N-vinyl caprolactam, N-vinyl-5-methyl-2-pyrrolidone, N-vinyl-5-ethyl-2-pyrrolidone, N-vinyl-6-méthyl-2-pipéridone, N-vinyl-6-éthyl-2-pipéridone, N-vinyl-7-méthyl-2-caprolactam, N-vinyl-7-ethyl-2-caprolactame.
- **unités monomères U4 :** unités monomères porteuses de groupements ammonium, notamment des esters d'acides mono- ou di- carboxyliques [alpha],[beta]-éthyléniquement insaturés avec des aminoalcools, comme les N,N-diméthylaminométhyl(méth)acrylate, N,N-diméthylaminoéthyl (méth)acrylate, N,N-diéthylaminoethyl acrylate, N,N-dimethylaminopropyl (méth)acrylate, N,N-diéthylaminopropyl(méth)acrylate et N,N-dimethylaminocyclohexyl (méth)acrylate ;
   amides d'acides mono- ou di- carboxyliques [alpha],[beta]-éthyléniquement insaturés avec des diamines ayant au moins un groupe amine primaire ou secondaire, tels que les N-[2-(diméthylamino)ethyl]acrylamide, N[2-(dimethyl amino)ethyl]methacrylamide, N-[3-(diméthylamino)propyl]acrylamide, N-[3-(diméthylamino)propyl]methacrylamide, N-[4-(diméthylamino)butyl]acrylamide, N-[4-(diméthylamino)butyl]méthacrylamide, N-[2-(diethylamino)ethyl] acrylamide, N-[4-(dimethylamino)cyclohexyl]acrylamide, N-[4-(dimethylamino) cyclohexyl]méthacrylamide
   N,N-diallylamines et N,N-diallyl-N-alkylamines incluant notamment les 3-sulfopropyldiméthyl-3-méthacrylamidopropylammonium, N-(2-méthacryloyl oxyéthyl)-N,N-diméthyl-N-(3-sulfopropyl)ammoniumbétaine, N-(2-1-(3-sulfo propyl)-2-vinylpyridiniumbétaine, et N-(2-1-(3-sulfopropyl)-4-vinylpyridinium bétaine
- **unités monomères U5** : unités monomères acrylate, porteuses de groupement COOH ou COO-, incluant notamment l'acide acrylique, l'acide méthacrylique, l'acide éthacrylique, l'acide [alpha]-chloro-acrylique, l'acide crotonique, l'acide maléique, l'acide itaconique, l'acide citraconique, l'acide mésaconique, l'acide glutaconique, l'acide aconitique, l'acide fumarique ; les monoesters d'acide dicarboxylique monoéthyléniquement insaturés en C4-C10 et de préférence en C4 à C6, comme le maléate de monométhyle. Selon un mode de réalisation possible, le bloc (B) de nature hydrophile employé lorsque le fluide (F) est un fluide aqueux est constitué essentiellement, voire exclusivement, par des unités monomères du type précités,
où, dans les unités précitées, les groupes acides peuvent être en tout ou partie sous la forme d'acide libre et/ou sous forme de sel par exemple de potassium, sodium ou ammonium (forme neutralisée).

Au sens où elle est employée dans la présente description, l'expression *« polymère ou bloc polymère constitué au moins majoritairement par des unités monomères* '*x*'» désigne un (bloc) homopolymère ou copolymère résultant de la polymérisation d'un mélange de monomères incluant des monomères x, ce (bloc) homopolymère ou copolymère comprenant moins de 25% en mole, de préférence moins de 15% et encore plus avantageusement moins de 10% en mole d'unités monomères autres que les unités 'x'.

L'expression « *polymère ou bloc polymère constitué essentiellement par des unités monomères* '*x*' » désigne quant à elle, au sens de la présente description, un (bloc) homopolymère ou copolymère constitué au moins majoritairement par des unités monomères 'x' du type précité, comprenant plus spécifiquement moins de 5% en mole, de préférence moins de 2% et encore plus avantageusement moins de 1% en mole d'unités monomères autres que les unités 'x'.

Selon un mode de réalisation particulier, compatibles avec les modes précédents, le bloc (B) de nature hydrophile employé lorsque le fluide (F) est un fluide aqueux peut comprendre des monomères hydrophobes en faibles proportions, typiquement à raison d'au moins 0,05%, notamment au moins 0,1%, voire au moins 0,5%, le cas échéant ; cette teneur en monomères hydrophobes restant de préférence inférieure à 10 %, par exemple inférieure à 5%, notamment moins inférieure à 3%,voire à 2%, ces pourcentages étant exprimés en masse par rapport à la masse totale d'unité monomères dans le bloc (B). Lorsque des monomères hydrophobes de ce type sont présents, ils peuvent typiquement (mais non limitativement) être choisis parmi les acrylates d'alkyle (comme l'acrylate de méthyle) ; le styrène ; les méthacrylates d'alkyle ; et/ou l'acétate de vinyle.

Le bloc long (B) présent dans les polymères employés selon la présente invention a par ailleurs une masse suffisamment élevée pour assurer l'effet de contrôle du filtrat recherché. A cet effet, le bloc (B) a typiquement une masse moléculaire moyenne en poids supérieure à 100 000 g/mol, de préférence supérieure à 150 000 g/mol, par exemple supérieur à 200 000 g/mol, notamment supérieur à 250 000 g/mol, et ce notamment lorsque le bloc (B) est de l'un des types précités. En pratique, cette masse moléculaire moyenne en poids reste le plus souvent inférieure à 3 000 000 g/mol (et typiquement comprise entre 150 000 et 2 000 0000 g/mol), mais des masses plus élevées peuvent être envisagées dans l'absolu, hormis dans le cas particulier d'un fluide (F) utilisé dans le cadre d'une opération de cimentation, où il est préférable que la masse moléculaire moyenne en poids du bloc long (B) reste inférieure à 1 000 000 g/mol, et avantageusement inférieure à 800 000 g/mol.

Dans le cadre de la présente invention, il a par ailleurs été mis en évidence, que, de façon surprenante, l'effet de contrôle du filtrat recherché est obtenu pour des blocs (B) ayant une masse moléculaire moyenne en poids plus faible que 100 000 g/mol. Ainsi, selon un mode de réalisation particulier, le bloc (B) a une masse moléculaire moyenne en poids comprise entre 10 000 et à 100 000 g/mol, de préférence d'au moins 20 000 g/mol, par exemple d'au moins 25 000 g/mol, cette masse moléculaire moyenne en poids pouvant typiquement être inférieure à 90 000, par exemple inférieure à 75 000, voire inférieure à 50 000 .

Une estimation de la masse moléculaire moyenne en poids du bloc long (B) peut être mesurée par une chromatographie d'exclusion stérique et mesure de masse utilisant une calibration externe avec des étalons de polyoxyde d'éthylène (CES relative), ce qui conduit à une valeur légèrement majorée de la masse moléculaire moyenne en poids désignée dans la présente description par Mw(CES relative).

Cette Mw(CES relative) est typiquement mesurée dans les conditions suivantes :
Phase mobile :Mélange de 80% en masse d'eau désionisée additionnée de 0,1M NaNO3 et 20% en masse d'acetonitrile,.
Débit : 1 ml/min
Colonnes : Shodex OHpak SB 806 MHQ (3 colonnes de 30 cm)
Détection: Indice de réfraction (détecteur de concentration Agilent)
Concentration des échantillons: environ 0,5 % en masse de matière sèche dans la phase mobile
Injection: 100 ul
Référence interne: éthyleneglycol
Etalonnage : polyoxyde d'éthylène PEO

La Mw(CES relative) du bloc long (B) des polymères (P) utiles selon l'invention est en général supérieure ou égale à 125 000 g/mol de préférence supérieure ou égale à 150 000 g/mol, cette Mw(CES relative) étant typiquement entre 200 000 et 2 500 000 g/mol, notamment entre 250 000 et 2 000 000 g/mol. Selon un mode de réalisation plus particulier, elle peut être inférieure à 125 000 g/mol , par exemple comprise entre 12 500 et 100 000 g/mol.

Dans le cas d'un fluide (F) utilisé dans le cadre d'une opération de cimentation, la Mw(CES relative) du bloc long (B) des polymères (P) et typiquement (mais non limitativement) entre 25 000 et 900 000 g/mol, par exemple entre 250 000 et 900 000 g/mol.

En pratique, on mesure la Mw(CES relative) du polymère (P), qui, du fait de la faible masse du bloc (A) représente également une assez bonne approximation, majorée, de la masse moléculaire moyenne en masse du bloc (B). La Mw(CES relative) du polymère (P) est en général supérieure ou égale à 15 000 g/mol, et par exemple supérieure ou égale à 150 000 g/mol, de préférence supérieure ou égale à 200 000 g/mol, par exemple supérieure ou égale à 300 000 g/mol, notamment supérieur ou égale à 400 000 g/mol, cette Mw(CES relative) du polymère (P) étant typiquement entre 200 000 g/mol et 2 500 000 g/mol, notamment entre 250 000 g/mol et 2 000 000 g/mol. Elle est plus particulièrement entre 25 000 et 900 000 g/mol, par exemple entre 250 000 g/mol et 800 000 g/mol dans le cas d'un fluide (F) utilisé dans le cadre d'une opération de cimentation.

Dans le cas particulier où le fluide (F) est utilisé dans une opération de cimentation (coulis de ciment pétrolier, typiquement) :
- le bloc (B) est avantageusement un bloc de nature hydrophile, de préférence comprenant des unités U1 du type précité, notamment des unités diméthylacrylamide DMA, éventuellement, mais non nécessairement, en association avec des unités U2, notamment des unités acide acrylamidométhylpropanesulfonique (AMPS), éventuellement en tout ou partie sous forme de sulfonate, par exemple sous la forme de son sel de sodium.

Selon un mode de réalisation particulier, le bloc (B) est constitué au moins majoritairement (par exemple essentiellement, voire exclusivement) par un mélange d'unités DMA et AMPS, avec un rapport molaire DMA/AMPS par exemple compris entre 60/40 et 90/10, notamment entre 75/25 et 85/15 et typiquement de l'ordre de 80/20.
- le bloc (B) a typiquement une masse moléculaire moyenne en poids comprise entre 150 000 et 750 000 g/mol, de préférence entre 200 000 et 700 000 g/mol. Alternativement, le bloc (B) peut avoir une masse moléculaire moyenne en poids comprise entre 15 000 et 150 000 g/mol, de préférence entre 20 000 et 100 000 g/mol.
- le bloc (B) a typiquement une Mw(GPC relative) comprise entre 200 000 et 800 000 , de préférence entre 250 000 et 900 000 g/mol , par exemple 300 000 à 600 000 g/mol le polymère (P) ayant en général une Mw(CES relative) comprise dans ces gammes. Le bloc (B) peut alternativement avoir une Mw(GPC relative) comprise entre 20 000 et 200 000 , de préférence entre 25 000 et 180 000 g/mol , par exemple 30 000 et 150 000 g/mol, le polymère (P) ayant en général une Mw(CES relative) comprise dans ces gammes.

Le bloc long (B) employé lorsque le fluide (F) est un coulis de ciment pétrolier est typiquement un bloc statistique DMA/AMPS, avec un ratio molaire DMA/AMPS entre 75/25 et 85/15 (typiquement de l'ordre de 80/20), et une Mw(GPC-MALS) comprise entre 20 000 et 7500 000, notamment entre 200 000 et 750 0000, par exemple entre 400 000 et 600 000.

### Les particules (p) et le bloc court (A)

La notion de « particule » au sens où elle est employée dans la présente description ne se cantonne pas à celle de particules individualisées. Elle désigne de façon plus générale des entités solides dispersables au sein d'un fluide, sous la forme d'objets (particules individuelles, agrégats ...) dont toutes les dimensions sont inférieures à 5 mm, de préférence à 2 mm, par exemple inférieures à 1 mm.

La nature des particules (p) et du bloc court (A) des polymères (P) utilisés selon la présente invention peuvent varier en une assez large mesure, sous réserve que le bloc (A) interagisse avec les particules (p) et conduise à une immobilisation, de préférence irréversible, de polymère (P) sur la surface des particules (p).

Pour ce faire, le bloc (A) comprend en général des unités monomères porteuses de groupements développant avec les particules (p) des interactions plus fortes que le bloc long (B).

Selon l'invention, les particules (p) sont des particules minérales introduites au sein du fluide (F) ou avec lesquelles le fluide (F) entre en contact suite à son injection. Ces particules (p) sont des particules de ciment, de carbonate de calcium, d'argile, de silice, de sable ou de noir de carbone. Selon ce mode de réalisation, le bloc (A) est de préférence constitué au moins majoritairement (et de préférence essentiellement, voire exclusivement) par des unités monomères choisies dans les groupes préférentiels définis ci-après, à adapter au cas par cas en fonction de la nature des particules (p). :
- pour des particules (p) de carbonate de calcium ou de ciment :
   le bloc (A) peut notamment être constitué au moins majoritairement (et de préférence essentiellement, voire exclusivement) par :
   ▪ des unités monomères U5 du type précité, avantageusement présentes dans le bloc (A) ; et/ou
   ▪ des unités monomères U3 du type précité ; et/ou
   ▪ des unités monomères U6 porteuses de groupements phosphate, phosphonate ou phosphinate (sous forme d'acide libre et/ou sous forme saline), comme par exemple des unités phosphate de monoacryloxyéthyle, phosphate de bis(2-méthacryloxyéthyle), les unités monomères introduites en employant les Sipomer PAM 100, 200, 400 ou 5000 disponibles auprès de la société Solvay, l'acide vinylphosphonique, l'acide allylphosphonique, l'acide isopropylphosphonique, le phosphonate de diallyle aminométhylène et leurs sels.
   Le bloc (B) est alors typiquement constitué au moins majoritairement (et de préférence essentiellement, voire exclusivement) par des unités U1 et/ou U2 du type précité
- pour des particules (p) de silice ou de sable :
   le bloc (A) peut notamment être constitué au moins majoritairement (et de préférence essentiellement, voire exclusivement) par :
   ▪ des unités monomères U3 du type précité ; et/ou
   ▪ des unités monomères U4 du type précité ; et/ou
   ▪ des unités monomères U7 (méth)acrylate fonctionnalisé par des polydimethylsiloxanes comme le triméthylsiloxy PEG 4-5 methacrylate, ou le(3-trimethoxysilyl)propyl methacrylate
   Le bloc (B) est alors typiquement constitué au moins majoritairement (et de préférence essentiellement, voire exclusivement) par des unités U1 et/ou U2 et/ou U5 du type précité
- pour des particules (p) d'argile :
   le bloc (A) peut notamment être constitué au moins majoritairement (et de préférence essentiellement, voire exclusivement) par
   ▪ des unités monomères U4 du type précité ; et/ou
   ▪ des unités monomères U6 du type précité.
   Le bloc (B) est alors typiquement constitué au moins majoritairement (et de préférence essentiellement, voire exclusivement) par des unités U1 et/ou U2 du type précité
- pour des particules (p) de noir de carbone
   le bloc (A) peut notamment être constitué au moins majoritairement (et de préférence essentiellement, voire exclusivement) par des unités U8 hydrophobes, incluant notamment
   les esters d'acides mono ou di-carboxylique [alpha],[beta]-éthyléniquement insaturés avec des alcools en C1-C20, comme par exemple les méthyl (méth)acrylate, méthyl éthacrylate, éthyl (méth)acrylate, éthyl éthacrylate, n-propyl (méth)acrylate, isopropyl (méth)acrylate, n-butyl (méth)acrylate, sec-butyl (méth)acrylate, tert-butyl (méth)acrylate, tert-butyl éthacrylate, n-hexyl (méth)acrylate, n-heptyl (méth)acrylate, n-octyl (méth)acrylate, 1,1,3,3-tetraméthylbutyl (méth)acrylate, éthylhexyl (méth)acrylate, n-nonyl (méth)acrylate, n-decyl (méth)acrylate, n-undecyl (méth)acrylate, tridecyl(méth)acrylate, myristyl (méth)acrylate, pentadecyl (méth)acrylate, palmityl (méth)acrylate, heptadecyl (méth)acrylate, nonadecyl (méth)acrylate, arachinyl (méth)acrylate, béhényl (méth)acrylate, lignoceryl (méth)acrylate, cérotinyl (méth)acrylate, mélissinyl (méth)acrylate, palmitoléoyl (meth)acrylate, oléyl (méth)acrylate, linoléyl (méth)acrylate, linolényl (méth)acrylate, stéaryl (méth)acrylate, lauryl (méth)acrylate, les mono, di or tristyryl phényl (meth)acrylates éventuellement éthoxylés entre les groupes aromatique et méthacrylate ; et/ou
   - les unités monomères vinylaromatiques comme le styrène, le 2-méthylstyrène, 4-méthylstyrène, 2-(n-butyl)styrène, 4-(n-butyl)styrène, 4-(n-decyl)styrène
   - les unités monomères fluorées, comme les (méth)acrylates d'alkyle perfluorés ou hautement fluorés.

Le bloc (B) est alors typiquement constitué au moins majoritairement (et de préférence essentiellement, voire exclusivement) par des unités des unités U1 et/ou U2 et/ou U5 du type précité

Quelle que soit sa nature chimique, le bloc court (A) présent dans les polymères employés selon la présente invention a, en général, une masse moléculaire moyenne en poids entre 500 et 30 000 g/mol, par exemple entre 1000 et 25 000 g/mol et ce notamment lorsque le bloc (A) est de l'un des types précités.

Selon un mode de réalisation particulièrement intéressant, employé lorsque les particules (p) sont des particules de ciment ou de carbonate de calcium, le bloc court (A) est un bloc homopolymère poly(acide acrylique) de masse moléculaire moyenne en poids allant de 1 000 à 20 000 g/mol.

La masse moléculaire en poids du bloc court (A) peut être mesurée notamment par une chromatographie par perméation de gel suivie d'une analyse par diffusion de la lumière multiangle (GPC-MALS)

### Les polymères (P)

Les polymères utiles selon la présente invention sont des polymères particuliers, qui comprennent au moins trois blocs dont un a une taille très différente des deux autres, incluant un bloc (B) de taille élevée.

Les polymères (P) de type tribloc ou étoile peuvent typiquement être préparés par polymérisation radicalaire contrôlée, ce qui permet de contrôler finement la taille des blocs. Les polymères de type peigne peuvent également être obtenus par polymérisation radicalaire contrôlée ; ou bien par post-greffage de polymères eux-mêmes avantageusement obtenus par polymérisation radicalaire contrôlée, par exemple dans les conditions définies ci-après.

La technique de polymérisation radicalaire contrôlée est une technique bien connue en soi, qui permet, à l'aide d'agent de contrôle de la polymérisation, d'obtenir des polymères de masses contrôlées et notamment des polymères séquencés dont on peut contrôler à la fois l'architecture et la taille de chacun des blocs.

Des procédés de polymérisation radicalaire contrôlée bien adaptés pour la synthèse des polymères (P) utiles selon l'invention sont les procédés dit RAFT ou MADIX, qui mettent typiquement en œuvre un procédé de transfert réversible par addition-fragmentation employant des agents de contrôle (dits également de transfert réversible), par exemple de type xanthate (composés porteurs de fonctions -SC=SO-). A titre d'exemples de tels procédés, il peut notamment être fait mention de ceux décrits dans WO96/30421, WO 98/01478, WO 99/35178, WO 98/58974, WO 00/75207, WO 01/42312, WO 99/35177, WO 99/31144, FR2794464 ou WO 02/26836.

Ces procédés dits de « polymérisation radicalaire contrôlée » conduisent de façon bien connue à la formation de chaînes polymères qui croissent sensiblement toutes à la même vitesse, ce qui se traduit par une augmentation sensiblement linéaire des masses moléculaires avec la conversion et une distribution des masses resserrée, avec un nombre de chaînes qui reste typiquement sensiblement fixe pendant toute la durée de la réaction, ce qui permet de contrôler très aisément la masse molaire moyenne du polymère synthétisé (le rapport initial monomère/agent de contrôle définit le degré de polymérisation obtenu pour les chaînes synthétisé). Les chaînes obtenues présentent par ailleurs en général un caractère « vivant » : elles présentent en bout de chaîne le groupement réactif présent sur l'agent de contrôle. On peut de ce fait poursuivre la polymérisation sur la chaîne polymère obtenue, en conservant le caractère contrôlé de la polymérisation, ce qui peut notamment être utilisé pour synthétiser à l'extrémité d'un premier bloc polymère de taille contrôlée un autre bloc de composition différente et également de taille contrôlée .

Des polymères (P) triblocs utiles selon l'invention peuvent ainsi être préparés selon un procédé comprenant les étapes suivantes :
(E1) on synthétise un bloc (A) ou un bloc (B) des polymères (P) en mettant en contact en milieu aqueux :
   - les monomères éthyléniquement insaturés, identiques ou différents choisis pour la constitution du bloc (A) - respectivement du bloc (B) - ;
   - une source de radicaux libres adaptée à la polymérisation desdits monomères; et
   - un agent de contrôle de la polymérisation radicalaire, de préférence comprenant un groupe thiocarbonylthio -S(C=S)- ;
(E2) on synthétise un bloc (B) - ou respectivement un bloc (A) - à l'extrémité du bloc (A) - respectivement à l'extrémité du bloc (B) - formé dans l'étape (E1) en mettant en contact :
   - les monomères éthyléniquement insaturés, identiques ou différents, choisis pour la constitution du bloc (B) - respectivement du bloc (A) -;
   - une source de radicaux libres adaptée à la polymérisation desdits monomères; et
   - le polymère obtenu à l'issue de l'étape (E1), qui joue le rôle d'agent de contrôle de la polymérisation radicalaire et sur lequel se greffe le bloc (B) -respectivement le bloc (A)
(E3) on synthétise un bloc (A) - ou respectivement un bloc (B) - à l'extrémité du bloc (B) - respectivement à l'extrémité du bloc (A) - formé dans l'étape (E2) en mettant en contact :
   - les monomères éthyléniquement insaturés, identiques ou différents, choisis pour la constitution du bloc (A) - respectivement du bloc (B) -;
   - une source de radicaux libres adaptée à la polymérisation desdits monomères; et
   - le polymère obtenu à l'issue de l'étape (E2), qui joue le rôle d'agent de contrôle de la polymérisation radicalaire et sur lequel se greffe le bloc (A) -respectivement le bloc (B)

Dans chacune des étapes (E1) à (E3), la taille du bloc polymère en formation est contrôlée par le rapport molaire monomère/agent de contrôle correspondant à la quantité initiale de monomères rapportée à la quantité d'agent de contrôle : schématiquement, toutes les chaînes croissent à partir de chacun des agents de contrôle présent et les monomères se répartissent de façon homogène sur toutes les chaînes en croissance. Le rapport molaire monomère/agent de contrôle dicte de ce fait le degré de polymérisation du bloc synthétisé dans chacune des étapes, et permet donc de définir la masse moléculaire moyenne en nombre théorique attendue pour chacun des blocs.

Typiquement, les rapports molaire monomère/agent de contrôle dans les étapes (E1) et (E2) sont choisis de façon à ce que :
- La masse moléculaire moyenne en nombre théorique du bloc (A) est comprise entre 250 et 25 000 g/mol, de préférence entre 500 et 15 000 g/mol, notamment entre 1 000 et 10000g/mol.
- La masse moléculaire moyenne en nombre théorique du bloc (B) est comprise entre 70 000 et 5 000 000 g/mol, de préférence entre 80 000 et 3 000 000 g/mol, notamment entre 90 000 et 2 000 000 g/mol. Lorsque le polymère est destiné à une opération de cimentation, cette masse moléculaire moyenne en nombre théorique du bloc (B) est plus préférentiellement entre 90 000 et 1 000 000 g/mol, avantageusement entre 100 000 et 500 000 g/mol.

Le bloc (B) peut avantageusement être préparé dans l'étape (E2) en mettant en contact :
- les monomères éthyléniquement insaturés, identiques ou différents, choisis pour la constitution du bloc (B) ;
- une source de radicaux libres adaptée à la polymérisation desdits monomères; et
- le bloc (A) préparé selon l'étape (E1) précitée, qui joue le rôle d'agent de contrôle de la polymérisation radicalaire, de préférence comprenant un groupe thiocarbonylthio-S(C=S)-, et sur lequel se greffe le bloc (B)
avec une concentration en monomères au sein du milieu réactionnel de l'étape (E) qui est suffisamment élevée pour induire la gélification du milieu si la polymérisation était conduite en l'absence de l'agent de contrôle.

Cette technique de polymérisation permet d'accéder à des blocs (B) de taille élevée. Avantageusement, la synthèse du bloc (B) peut être réalisée dans les conditions de polymérisation décrites dans la demande WO 2012/042167.

Alternativement, lorsque le bloc (B) est hydrophile, le bloc (B) peut être synthétisé: en mettant en contact, au sein d'un milieu aqueux (M) dans lequel le bloc (B) formé n'est pas soluble :
- les monomères éthyléniquement insaturés, identiques ou différents, choisis pour la constitution du bloc (B), choisis solubles dans le milieu aqueux (M)
- au moins une source de radicaux libres ; et
- un stabilisant réactif qui comprend :
   - une chaîne polymère (CP) soluble dans le milieu (M)
   - un groupe (G) assurant un caractère vivant et contrôlé à la polymérisation radicalaire de l'étape (E), tel que, par exemple, un groupe porteur d'un groupe thiocarbonylthio -S(C=S)-

De façon générale, les conditions à mettre en œuvre dans les étapes de polymérisation précitées peuvent être celles typiquement mises en œuvre dans les polymérisations radicalaires contrôlées.

En particulier, on peut utiliser dans l'étape (E) du procédé de l'invention toute source de radicaux libres connue en soi. Il peut s'agir par exemple d'un des initiateurs suivants :
- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1 -bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :
- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Notamment dans le cas de polymérisation effectuées en milieu aqueux, il peut d'utiliser un amorceur radicalaire de type redox, qui présente l'avantage de ne pas nécessiter un chauffage du milieu réactionnel (pas d'amorçage thermique), ce qui permet de mieux gérer encore l'exothermie de la réaction.

Ainsi, la source de radicaux libres employée peut typiquement être choisie parmi les amorceurs redox classiquement utilisés en polymérisation radicalaire, typiquement ne nécessitant pas de chauffage pour leur amorçage thermique. Il s'agit typiquement d'un mélange d'au moins un agent oxydant avec au moins un agent réducteur.

L'agent oxydant présent dans le système redox est de préférence un agent hydrosoluble. Cet agent oxydant peut par exemple être choisi parmi les peroxydes, tels que : le peroxyde d'hydrogène, l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle ; le persulfate de sodium, le persulfate de potassium, le persulfate d'ammonium, ou bien encore le bromate de potassium.

L'agent réducteur présent dans le système redox est également, de préférence, un agent hydrosoluble. Cet agent réducteur peut typiquement être choisi parmi le formaldéhyde sulfoxylate de sodium (notamment sous sa forme de dihydrate, connue sous le nom de Rongalit ou sous la forme d'un anhydride), l'acide ascorbique, l'acide érythorbique, les sulfites, bisulfites ou métasulfites (sulfites, bisulfites ou métasulfites de métaux alcalins en particulier), les nitrilotrispropionamides, et les amines et ethanolamines tertiaires (de préférence hydrosolubles).

Des systèmes redox possibles comportent des combinaisons telles que :
- les mélanges de persulfates hydrosolubles avec des amines tertiaires hydrosolubles,
- les mélanges de bromates hydrosolubles (bromate de métaux alcalins par exemple) avec des sulfites hydrosolubles (sulfites de métaux alcalins par exemple),
- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,

- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Un système redox intéressant comprend (et de préférence consiste en) par exemple l'association de persulfate d'ammonium et de formaldéhyde sulfoxylate de sodium.

De façon générale, et en particulier dans le cas de l'utilisation d'un système redox du type persulfate d'ammonium/formaldéhyde sulfoxylate de sodium, il s'avère préférable que le milieu réactionnel de l'étape (E) soit exempt de cuivre. En cas de présence de cuivre, il est en général souhaitable d'ajouter un complexant du cuivre, tel que de l'EDTA.

La nature de l'agent de contrôle mis en œuvre dans les étapes de synthèse des blocs (A) et (B) peut quant à elle varier en une large mesure.

Selon une variante intéressante, l'agent de contrôle utilisé est un composé porteur d'un groupe thiocarbonylthio -S(C=S)-. Selon un mode de réalisation particulier, l'agent de contrôle peut être porteur de plusieurs groupes thiocarbonylthio.

Il peut éventuellement s'agir d'une chaîne polymère porteuse d'un tel groupe. Ainsi, l'agent de contrôle employé dans l'étape (E2) est un polymère vivant issu de l'étape (E1). On peut de même envisager que l'agent de contrôle de l'étape (E1) soit issu d'une étape (E0) préalable dans laquelle on a réalisé la polymérisation radicalaire d'une composition comprenant :
- des monomères éthyléniquement insaturés ;
- un agent de contrôle de la polymérisation radicalaire comprenant au moins un groupe thiocarbonylthio -S(C=S)- ; et
- un amorceur de la polymérisation radicalaire (source de radicaux libres).

Plus généralement, un agent de contrôle adapté à la synthèse du polymère (P) utile selon l'invention répond avantageusement à la formule (A) ci-dessous : 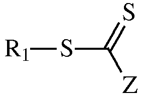 dans laquelle :
- Z représente :
   - un atome d'hydrogène,
   - un atome de Chlore,
   - un radical alkyl éventuellement substitué, aryl éventuellement substitué,
   - un hétérocycle éventuellement substitué,
   - un radical alkylthio éventuellement substitué,
   - un radical arylthio éventuellement substitué,
   - un radical alkoxy éventuellement substitué,
   - un radical aryloxy éventuellement substitué,
   - un radical amino éventuellement substitué,
   - un radical hydrazine éventuellement substitué,
   - un radical alkoxycarbonyl éventuellement substitué,
   - un radical aryloxycarbonyl éventuellement substitué,
   - un radical carboxy, acyloxy éventuellement substitué,
   - un radical aroyloxy éventuellement substitué,
   - un radical carbamoyle éventuellement substitué,
   - un radical cyano,
   - un radical dialkyl- ou diaryl-phosphonato,
   - un radical dialkyl-phosphinato ou diaryl-phosphinato, ou
   - une chaîne polymère,
   et
- R₁ représente :
   - un groupe alkyle, acyle, aryle, aralkyle, alcène ou alcyne éventuellement substitué,
   - un cycle carboné ou un hétérocycle, saturé ou non, aromatique éventuellement substitué, ou
   - une chaîne polymère.

Les groupes R₁ ou Z, lorsqu'ils sont substitués, peuvent l'être par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, perfluoroalkyle CₙF₂ₙ₊₁, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Selon un mode de réalisation particulier, R₁ est un groupe alkyle substitué ou non, de préférence substitué.

Les groupes alkyle, acyle, aryle, aralkyle ou alcyne éventuellement substitués présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes sont des radicaux généralement de 2 à 10 atomes de carbone, ils présentent au moins une insaturation acétylénique, tel que le radical acétylenyle.

Le groupe acyle est un radical présentant généralement de 1 à 20 atomes de carbone avec un groupement carbonyle.

Parmi les radicaux aryles, on peut notamment citer le radical phényle, éventuellement substitué notamment par une fonction nitro ou hydroxyle.

Parmi les radicaux aralkyles, on peut notamment citer le radical benzyle ou phénéthyle, éventuellement substitué notamment par une fonction nitro ou hydroxyle.

Lorsque R₁ ou Z est une chaîne polymère, cette chaîne polymère peut être issue d'une polymérisation radicalaire ou ionique ou issue d'une polycondensation.

Dans le cadre de la présente invention, il est notamment intéressant d'employer à titre d'agents de contrôle des xanthates, des trithiocarbonates, des dithiocarbamates, ou des dithiocarbazates.

Avantageusement, on utilise comme agent de contrôle des composés porteurs d'une fonction xanthate -S(C=S)O-, par exemple porteur d'une fonction O-ethyl xanthate de formule -S(C=S)OCH₂CH₃, comme par exemple le O-ethyl-S-(1-methoxycarbonyl ethyl) xanthate de formule (CH₃CH(CO₂CH₃))S(C=S)OEt.

Un autre agent de contrôle possible dans l'étape (E) est le dibenzyltrithiocarbonate de formule PhCH₂S(C=S)SCH₂Ph (où Ph=phényle).

Les polymères en peigne selon l'invention peuvent typiquement être obtenus en copolymérisant par voie radicalaire, de préférence contrôlée, des monomères éthyléniquement insaturé en présence de macromonomères porteurs d'un bloc de type (A) ou (B), ce qui conduit à la formation d'une chaîne monomère porteuse de bloc latéraux de type (A) ou (B).

Ainsi, si on souhaite par exemple synthétiser un polymère en peigne portant des groupes latéraux de type (B) sur un bloc de type (A), on peut typiquement mettre en contact :
- des monomères m_{A} éthyléniquement insaturés adaptés pour la constitution d'un bloc de type (A);
- des polymères réactifs (macromonomères) comportant un bloc polymère de type(B) et un groupement éthyléniquement insaturés
- une source de radicaux libres adaptée à la polymérisation desdits monomères; et
- de préférence un agent de contrôle de la polymérisation radicalaire, typiquement un agent comprenant un groupe thiocarbonylthio -S(C=S)- du type précité.

Dans ce cas, il se forme une structure en peigne, les macromonomères étant intégrés dans le bloc de type (A) en formation à partir des monomères m_{A} schématiquement comme suit :

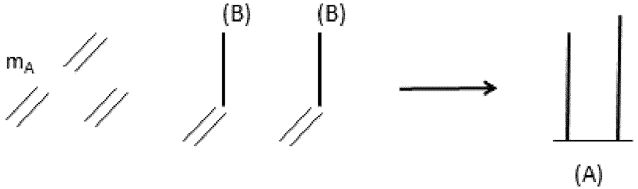

Typiquement, on peut utiliser selon ce mode de réalisation des monomères acide (méth)acryliques à titre de monomère m_{A} et des macromonomères (methoxy)polyéthylène glycol ((M)PEG) porté sur un acide (meth)acrylique CH₃O-(C₂H₄O)ₙ-OC(O) (CH₃)C=CH₂ , ce par quoi on obtient un polymère en peigne dont les chaînes latérales sont des (M)PEG. De préférence, la masse moléculaire moyenne en poids de chacune de ces chaînes (M)PEG latérales est supérieure à 5 000 g/mol, plus préférentiellement supérieure à 10 000 g/mol (par exemple entre 10 000 g/mol et 50 000 g/mol), et plus préférentiellement encore supérieure à 20 000 g/mol.

De même, si on souhaite par exemple synthétiser un polymère en peigne portant des groupes latéraux de type (A) sur un bloc de type (B), on peut typiquement mettre en contact :
- des monomères m_{B} éthyléniquement insaturés adaptés pour la constitution d'un bloc de type (B);
- des polymères réactifs (macromonomères) comportant un bloc polymère de type (A) et un groupement éthyléniquement insaturés
- une source de radicaux libres adaptée à la polymérisation desdits monomères; et
- de préférence un agent de contrôle de la polymérisation radicalaire, typiquement un agent comprenant un groupe thiocarbonylthio -S(C=S)- du type précité.

Plus généralement, on peut obtenir des polymères en peigne porteurs de groupe latéral de type (A) et/ou de type (B) en mettant en contact :
- des monomères éthyléniquement insaturés (éventuellement mais pas nécessairement des monomères m_{A} ou m_{B} du type précité);
- des polymères réactifs (macromonomères) comportant un groupement éthyléniquement insaturé et , selon la nature des groupes latéraux recherchés, un bloc polymère de type (A) et/ou un bloc polymère de type (B)
- une source de radicaux libres adaptée à la polymérisation desdits monomères ; et
- de préférence un agent de contrôle de la polymérisation radicalaire, typiquement un agent comprenant un groupe thiocarbonylthio -S(C=S)- du type précité.

Alternativement, des polymères en peigne selon l'invention peuvent être synthétisés par post-greffage de chaînes polymères par des greffons porteurs de blocs de type (A) et /ou (B) et d'un groupe de greffage, selon toute méthode connue en soi. A titre d'exemple, on peut notamment effectuer le greffage de bloc polyoxyde d'éthylène sur un polycarylate, en faisant réagir sur le polyacrylate un greffon méthoxy polyethylène glycol.

### Applications pratiques

Les polymères utiles selon l'invention peuvent être employés dans la quasi-totalité des fluides mis en œuvre en extraction pétrolière et potentiellement sujet à la perte de fluide.

Selon un mode de réalisation particulier de l'invention le fluide (F) est un coulis de ciment pétrolier, qui comprend le polymère (P) comme additif. Dans ce cas, le polymère (P), associé aux particules présentes dans ciment, assure l'effet de contrôle du filtrat lors de la cimentation.

Selon un autre mode de réalisation, le fluide (F) est un fluide de forage ou un fluide de fracturation, qui comprend le polymère (P) associé à des particules (p). Les particules (p) sont alors le plus souvent introduites conjointement au polymère dans le fluide (F) avant l'injection du fluide. Le polymère assure alors en général une stabilisation de la dispersion des particules dans le fluide (F), en maintenant en suspension dans le fluide au moins une partie des particules (p).

Les concentrations en polymère et particules à employer dans ces différents fluides sont à adapter au cas par cas en fonction de l'application visée et de la rhéologie recherchée.

Différents aspects et avantages de l'invention seront encore illustrés par l'exemple ci-après dans lequel un polymère a été préparé selon le procédé de l'invention.

### Exemple

### Copolymère tribloc poly(acide acrylique)-b-poly(N,N-dimethylacrylamide-co-AMPS)-b-poly(acide acrylique)

### 1.1: Synthèse d'un bloc poly(acide acrylique) à terminaison xanthate

La synthèse a été effectuée à l'échelle du laboratoire dans un réacteur en verre équipé d'une agitation mécanique, d'un système de chauffage / refroidissement et de régulation de température efficace et un système de reflux / condensation des vapeurs.

La composition de charges initiales des réactifs et des solvants (acrylique acide AA, Xanthate, eau, éthanol et V50) mis dans le réacteur est donnée dans le tableau 1.

De l'O-éthyle-S-(1-methoxycarbonyl éthyle) xanthate (Rhodixan A1) de formule (CH3CH(CO2CH3))S(C=S)OEt a été utilisé comme agent de transfert MADIX. La quantité indiquée dans le tableau 1 correspond à la valeur de la masse moléculaire en nombre théorique attendue (Mn, th = 1 kg/mol) calculée par le rapport de la quantité de monomère à la quantité de xanthate.

Le barbotage d'azote du mélange réactionnel a été utilisé pendant toute la synthèse.

La solution du monomère dans l'eau et de l'initiateur V-50 (2,2'-Azobis(2-methylpropionamidine)dichlorhydrate) dans l'eau ont été introduit dans le réacteur séparément de manière semi-continu durant des périodes déterminées et en gardant une température constante 60°C +/- 2 (voir tableau 1 avec charges et conditions de réaction).

Le mode opératoire général de synthèse est le suivant:
▪ Préparer des solutions d'initiateur et du monomère dans l'eau et les mettre dans des récipients d'alimentation, en suite remplir des lignes d'alimentation du réacteur avec ces solutions.
▪ Commencer un barbotage d'azote du réacteur. Maintenir le barbotage pendant toute la réaction.
▪ Chargez l'eau déminéralisée, l'éthanol, l'acide acrylique (première partie), le Rhodixan A1 et l'initiateur V50 (première partie) dans le réacteur.
▪ Commencez l'agitation à 150 RPM.
▪ Chauffer le réacteur à 60°C
▪ A température 60°C (+/-2) commencer une co-alimentation de la solution d'initiateur en semi-continu avec une alimentation séparée de la solution de monomère.
   - Nourrir des quantités appropriées de la solution d'initiateur 2 au fil du temps approprié (voir tableau des conditions de réaction pour exemple particulier).
   - À partir de même temps, nourrir des quantités appropriées de la solution de monomères dans le temps approprié (voir tableau 1 ci-dessous des conditions de réaction).
▪ Après la fin de deux alimentations semi-continue, maintenir le chauffage à 60°C pendant 3 heures.
▪ Refroidir le produit à une température <40°C et décharger le produit pour des analyses.

Selon cette procédure de l'acide polyacrylique fonctionnalisé par le groupement xanthate a été synthétisé avec une masse moléculaire en nombre visée à 1000 g/mol.

**Tableau 1.**

| Conditions de la synthèse de bloc poly(acide acrylique) vivant à terminaison xanthate | | | | | | | | | | |
|---|---|---|---|---|---|---|---|---|---|---|
| Référencé | Mn théorique visée | Charges initiaux des réactifs dans le réacteur | | | | | Solution AA à introduire en semi-continu | | Solution V50 (2) à introduire en semi-continu | |
| | g/mol | Eau grams | Ethanol grams | AA grams | Xanthate grams | V50 (1) grams | AA à 38.7% dans l'eau; grams | Durée d'introduction minutes | V50 à 10% dans l'eau, grams | Durée d'introduction minutes |
| A1 | 1000 | 14,5 | 21,7 | 5,0 | 10,4 | 0,11 | 116,3 | 180 | 6,80 | 240 |

Les conversions de monomère et de Rhodixan A1 ont été déterminées par RMN 1H.

Une analyse en chromatographie d'exclusion stérique dans un mélange de l'eau et de l'acétonitrile (80/20) additivé de NaNO3 (0,1N) avec un détecteur MALLS dix-huit angles a fourni les valeurs de masse molaire moyenne en poids (M_{w}) et d'indice de polymolécularité (M_{w}/Mₙ) reporté dans le tableau 2 ci-après.

**Tableau 2**

| **Bloc synthétisé** | **Mₙ,th** | **Conversion Xanthate (g)** | **Conversion AA (RMN ¹H)** | **M_{w} (g/mol)** | **M_{w}/Mₙ** |
|---|---|---|---|---|---|
| **A1** | 1000 | > 99.5% | >99.5% | 1800 | 1.4 |

### 1.2 : Synthèse de copolymère triblocs à partir du bloc A1

Dans un réacteur en verre double enveloppe muni d'une pale d'agitation, un réfrigérant à boules, et une arrivée d'azote, sont introduits 1,469 g de solution du bloc poly(acide acrylique) à terminaison xanthate A1 (en solution à 35% en masse), 9.83g de 2-Acrylamido-2-methylpropane sulfonic acid (AMPS) (solution aqueuse à 50% en masse), 8,50g de Dimethylacrylamide (DMAM) et 255.7g d'eau déminéralisée. Le pH est ajusté entre 2.0 et 2.5 avec de l'acide chlorhydrique à 37% en masse.

Préparer une solution de monomères (solution A) en pesant respectivement 55,68g d'AMPS (solution à 50% en masse), 48.16g de DMAM et 63.934g d'eau déminéralisée.

Dégazer le pied de cuve pendant 30 minutes et chauffer à 40°C.

Lorsque le milieu réactionnel atteint la température de 40°C, sont ajoutés 1,34g de Persulfate de d'ammonium (APS) (solution à 5% en masse) et 0,21 g de Formaldéhyde sulfoxylate de sodium (NaFS) (solution à 0,25% en masse). Introduire alors à un débit de 1,40mL /min pendant 2h 167.77g de la solution A dans le milieu réactionnel. Dans un même temps sur une durée de 2h sont également ajoutés 5,15g de solution de NaFS à 0,25% en masse.

Pour l'obtention d'un troisième bloc PAA avec une masse molaire moyenne en nombre visée de 1000g/mol, après 2h30 de réaction sont ajoutés 0.45g d'Acide Acrylique et la température est maintenue à 40°C pendant 2h30.

La conversion des monomères etudié_par analyse RMN ¹H montre une conversion quantitative.

### 1.3 : Evaluation du polymère triblocs dans un coulis de ciment

Le polymère triblocs a été utilisé pour réaliser des coulis de ciment pétrolier ayant la formulation suivante :

| | |
|---|---|
| Eau de ville : | 335 g |
| Polymère dibloc (à 20% en solution aqueuse) : | 15g |
| Ciment Dykheroff black label (API Class G) : | 781,5 g |

L'agent de contrôle de filtrat est mélangé aux additifs liquides et à l'eau de ville avant incorporation du ciment.

La formulation et le test de filtration ont été réalisés selon la norme de l'American Petroleum Institute (API recommended practice for testing well cements 10B, 2nd edition April 2013).

Après mélange et dispersion de l'ensemble des constituants de la formulation, le coulis obtenu a été conditionné à 88°C pendant 20 minutes dans un consistomètre atmosphérique (modèle 1250 fourni par Chandler Engineering Inc.) préalablement stabilisé à cette température, ce qui permet de simuler les conditions subies par le coulis de ciment lors de la descente dans un puits.

La performance en contrôle de filtrat a été déterminée par une filtration statique à 88°C dans une cellule double ouverture de capacité 175mL équipée d'une grille métallique 325meshx60mesh (fourni par OFITE Inc., référence 170-45). Le volume de filtrat collecté est de 27.6mL ce qui correspond à un volume API correct de 55mL.

## Revendications

1. Utilisation, à titre d'agent de contrôle du filtrat dans un fluide aqueux (F) injecté sous pression dans une formation souterraine,
où ledit fluide aqueux (F) comprend des particules solides (p) et/ou est mis en contact avec des particules solides (p) au sein de la formation souterraine suite à son injection,
d'un polymère séquencé (P) comprenant au moins trois blocs, incluant :
- au moins un premier bloc (A) qui s'adsorbe, de préférence irréversiblement, sur au moins une partie des particules (p); et
- au moins un deuxième bloc (B), de composition distincte de celle dudit premier bloc, et de masse moléculaire moyenne en poids supérieure à 10 000 g/mol et soluble dans le fluide (F).
- au moins un troisième bloc de type (A) ou de type (B)
et où les particules (p) sont des particules de carbonate de calcium ou de ciment ; des particules de silice ou de sable ; des particules d'argile ; ou des particules de noir de carbone

2. Utilisation selon la revendication 1, où le polymère séquencé (P) est un polymère tribloc de type (A)-(B)-(A) ou (B)-(A)-(B) ; ou un polymère de type en étoile, comprenant au moins une branche de type (A) et au moins deux branches de type (B) ou bien comprenant au moins deux branches de type (A) et au moins une branche de type (B).

3. Utilisation selon la revendication 1, où le polymère séquencé (P) est un polymère de type peigne, choisi parmi :
- un polymère portant plusieurs blocs latéraux de type (A) sur un bloc linéaire de type (B) ; ou
- un polymère portant plusieurs blocs latéraux de type (B) sur un bloc linéaire de type (A) ; ou
- un polymère portant plusieurs blocs latéraux de type (A) et (B) sur une chaîne polymère linéaire.

4. Utilisation selon l'une des revendications 1 à 3, où le fluide (F) injecté comprend le polymère (P) mais ne comprend pas de particules solides (p), et rencontre lesdites particules (p) au sein de la formation souterraine suite à son injection.

5. Utilisation selon l'une des revendications 1 à 3, où le fluide (F) injecté comporte avant l'injection au moins une partie des particules (p) associées au polymère (P), le polymère étant avantageusement employé dans ce cas en tant qu'agent dispersant et stabilisant de la dispersion des particules (p).

6. Utilisation selon l'une des revendications 1 à 5 où le fluide (F) est un coulis de ciment pétrolier, qui comprend le polymère (P) comme additif.

## Patentansprüche

1. Verwendung, als Fluidverlustkontrollmittel in einem wässrigen Fluid (F), das unter Druck in eine unterirdische Formation eingespritzt wird,
wobei das wässrige Fluid (F) Feststoffteilchen (p) umfasst und/oder nach dem Einspritzen mit Feststoffteilchen (p) in der unterirdischen Formation in Kontakt gebracht wird,
eines Blockpolymers (P), das mindestens drei Blöcke umfasst, umfassend:
- mindestens einen ersten Block (A), der an mindestens einem Teil der Teilchen (p), vorzugsweise unumkehrbar, adsorbiert wird; und
- mindestens einen zweiten Block (B) mit einer anderen Zusammensetzung als der des ersten Blocks, mit einer gewichtsgemittelten molaren Masse über 10.000 g/mol, der in dem Fluid (F) löslich ist, - mindestens einen dritten Block vom Typ (A) oder Typ (B) und wobei die Teilchen (p) Calciumcarbonat- oder Zementteilchen; Siliciumdioxid- oder Sandteilchen; Tonteilchen; oder Rußteilchen sind.

2. Verwendung nach Anspruch 1, wobei das Blockpolymer (P) ein Dreiblock-Polymer vom Typ (A)-(B)-(A) oder (B)-(A)-(B) ist oder ein Sternpolymer ist, das mindestens einen Arm vom Typ (A) und mindestens zwei Arme vom Typ (B) umfasst oder mindestens zwei Arme vom Typ (A) und mindestens einen Arm vom Typ (B) umfasst.

3. Verwendung nach Anspruch 1, wobei das Blockpolymer (P) ein Kammpolymer ist, das ausgewählt ist aus:
- einem Polymer, das mehrere Seitenblöcke vom Typ (A) an einem linearen Block vom Typ (B) trägt; oder
- einem Polymer, das mehrere Seitenblöcke vom Typ (B) an einem linearen Block vom Typ (A) trägt; oder
- einem Polymer, das mehrere Seitenblöcke vom Typ (A) und (B) an einer linearen Polymerkette trägt.

4. Verwendung nach einem der Ansprüche 1 bis 3, wobei das eingespritzte Fluid (F) das Polymer (P) umfasst, jedoch keine Feststoffteilchen (p) umfasst, und nach dem Einspritzen auf die Teilchen (p) in der unterirdischen Formation trifft.

5. Verwendung nach einem der Ansprüche 1 bis 3, wobei das eingespritzte Fluid (F) vor dem Einspritzen zumindest einen Teil der mit dem Polymer (P) zusammengebrachten Teilchen (p) aufweist, wobei das Polymer in diesem Fall vorteilhafterweise als Dispergator und Stabilisator für die Dispersion der Teilchen (p) verwendet wird.

6. Verwendung nach einem der Ansprüche 1 bis 5, wobei das Fluid (F) ein Tiefbohrzementschlamm ist, der das Polymer (P) als Zusatzstoff umfasst.

## Claims

1. Use, as fluid loss control agent in an aqueous fluid (F) injected under pressure into a subterranean formation,
wherein said aqueous fluid (F) comprises solid particles (p) and/or is brought into contact with solid particles (p) within the subterranean formation subsequent to its injection,
of a block polymer (P) comprising at least three blocks including:
- at least one first block (A) which is adsorbed, preferably irreversibly, on at least a portion of a particle (p); and
- at least one second block (B) having a composition distinct from that of the first block, having a weight-average molecular weight of greater than 10 000 g/mol, and which is soluble in the fluid (F);
- at least one third block of type (A) or of type (B);
and wherein the particles (p) are particles of calcium carbonate or cement; particles of silica or sand; particles of clay; or particles of carbon black.

2. Use according to claim 1, wherein the block polymer (P) is a triblock polymer of type (A)-(B)-(A) or (B)-(A)-(B); or a polymer of star-branch type, comprising at least one branch of type (A) and at least two branches of type (B) or comprising at least two branches of type (A) and at least one branch of type (B).

3. Use according to claim 1, wherein the block polymer (P) is a polymer of comb type, selected from:
- a polymer carrying several side blocks of type (A) on a linear block of type (B); or
- a polymer carrying side blocks of type (B) on a linear block of type (A); or
- a polymer carrying several side blocks of type (A) and (B) on a linear polymer chain.

4. Use according to any one of claims 1 to 3, wherein the injected fluid (F) comprises the polymer (P) but does not comprise solid particles (p), and encounters the said particles (p) within the subterranean formation subsequent to its injection.

5. Use according to any one of claims 1 to 3, wherein the injected fluid (F) comprises, before the injection, at least a portion of the particles (p) combined with the polymer (P), the polymer being advantageously used, in this case, as dispersing and stabilizing agent for the dispersion of the particles (p).

6. Use according to any one of claims 1 to 5, wherein the fluid (F) is an oil cement grout which comprises the polymer (P) as additive.
